Europäisches Patentamt

(19) European Patent Office

Office européen des brevets

(11) EP 0 711 960 A1

(12) EUROPÄISCHE PATENTANMELDUNG

(43) Veröffentlichungstag:
15.05.1996 Patentblatt 1996/20

(51) Int. Cl.⁶: F24D 19/10

(21) Anmeldenummer: 95111803.3

(22) Anmeldetag: 27.07.1995

(84) Benannte Vertragsstaaten:
AT BE CH DE FR GB IT LI NL SE

(30) Priorität: 14.11.1994 CH 3397/94

(71) Anmelder: Landis & Gyr Technology Innovation AG
CH-6301 Zug (CH)

(72) Erfinder:
• Marbach, Kuno
  CH-6043 Adligenswil (CH)
• Ulrich, Gerhard
  CH-5643 Sins (CH)

(54) **Verfahren und Vorrichtung zum Aufheizen von Brauchwasser**

(57) Bei einer Heizungsanlage zur Warmwasserbereitung und zur Raumheizung wird erfindungsgemäß im Sommerbetrieb die nach dem Abschalten des Brenners (2) im Brennraum des Heizkessels (1) vorhandene Überschußwärme allein in den Brauchwasserboiler (5) abgeführt. Das wird dadurch erreicht, daß eine vorhandene Heizkreispumpe (15) ausgeschaltet bleibt, während eine Brauchwasserladepumpe (7) nachläuft. Das Abschaltkriterium für die Brauchwasserladepumpe (7) wird aus der Kesseltemperatur-Istwert $T_{Ki}$ und der Boilertemperatur-Istwert $T_{Bi}$ gebildet. Sobald die Differenz $\Delta T_i$ von Kesseltemperatur-Istwert $T_{Ki}$ und Boilertemperatur-Istwert $T_{Bi}$ auf einen einstellbaren Grenzwert $\Delta T_G$ abfallt, wird die Brauchwasserladepumpe (7) abgeschaltet. Die Überschußwärme des Heizkessels (1) wird dadurch ökonomisch genutzt und ein im Sommerbetrieb unerwünschtes Abgeben von Wärme in den Heizkreis (10) der Raumheizung unterbunden.

**Fig. 2**

EP 0 711 960 A1

## Beschreibung

Die Erfindung bezieht sich auf ein Verfahren zum Aufheizen von Brauchwasser sowie auf eine Vorrichtung zur Durchführung des Verfahrens gemäß dem Oberbegriff der Ansprüche 1 und 7.

Solche Verfahren bzw. Vorrichtungen dienen der Bereitstellung von Warmwasser für die Bewohner von Wohn- und/oder Gewerbebauten. Die Warmwasserbereitungs-Anlage ist dabei mit der Anlage zur Raumheizung kombiniert. Ein gemeinsamer Wärmeerzeuger dient dabei sowohl der Warmwasserbereitung als auch der Heizung. Im Winterhalbjahr sind dabei regelmäßig beide Anlageteile in Betrieb. Im Sommerhalbjahr hingegen, wenn Energie zur Raumheizung nicht benötigt wird, ist allein die Warmwasserbereitung erforderlich. Der gemeinsame Wärmeerzeuger dient dann allein der Warmwasserbereitung.

Eine Vorrichtung der im Oberbegriff des Anspruchs 7 genannten Art und damit auch ein Verfahren der im Oberbegriff des Anspruchs 1 genannten Art ist aus der DE-A1-35 29 814 bekannt. Um die beim Abschalten des Brenners im Heizkessel noch vorhandene Wärme abzuführen und damit ein Ansprechen des Sicherheitstemperaturbegrenzers sicher zu verhindern, wird vorgeschlagen, zusätzlich zur Boilerladepumpe auch noch die Heizkreispumpe zu betreiben, indem am Ende des Aufheizvorgangs für den Boiler die Heizkreispumpe unverzögert eingeschaltet wird.

Aus der DE-Druckschrift "Centratherm DC; K7.4.13 bis K7.4.16" ist erkennbar, daß die Boilerladepumpe am Ende einer Brauchwasserladung nachläuft. Die Nachlaufzeit der Boilerladepumpe ist begrenzt, aber auch abhängig von der Boilertemperatur und von einem von den Wärmeabnehmern vorgegebenen Sollwert. Da dieser Sollwert je nach Witterungsbedingungen und dem daraus folgenden unterschiedlichen Heizungsbedarf für die Raumheizung wechselnde Werte annehmen kann, besteht eine Abhängigkeit von diesem Heizungsbedarf.

Das Einschalten der Heizkreispumpe gemäß DE-A1-35 29 814 bringt es mit sich, daß dem Heizkreis für die Raumheizung überschüssige Kesselwärme zugeführt wird. Dies erfolgt auch dann, wenn beispielsweise im Sommerhalbjahr gar kein Heizungsbedarf besteht. Der Vorteil, daß überschüssige Kesselwärme abgeführt wird, wird mit dem Nachteil erkauft, daß die der Raumheizung dienenden Einrichtungen wie Rohre und Heizkörper erwärmt werden, obwohl gar kein Heizbedarf besteht. Diese Erwärmung kann ganz beträchtlich sein, weil die Temperatur des Heizkessels am Ende einer Brauchwasser-Aufheizphase größenordnungsmäßig 80 Grad Celsius. So kann es auch zu den sehr störenden Knackgeräuschen kommen, wodurch der Anlagenbenutzer auf diese Erwärmung von Teilen der Raumheizanlage selbst dann aufmerksam wird, wenn er die Wärmewirkung selbst gar nicht spürt. Durch diese Erwärmung der Einrichtungen für die Raumheizung werden die Nutzer der Räume insofern sehr verunsichert, weil sie annehmen, der Regler für die Heizungsanlage sei defekt. Nicht selten wird deshalb der Heizungsinstallateur aufgeboten, was unnütz Kosten verursacht. Außerdem ist das Abführen von Wärme in den Heizkreis dann unökonomisch, wenn gar kein Heizbedarf besteht.

Der Erfindung liegt die Aufgabe zugrunde, die Erwärmung von der Raumheizung dienenden Einrichtungen jedenfalls dann zu vermeiden, wenn kein Heizbedarf besteht, und trotzdem die überschüssige Wärme aus dem Heizkessel abzuführen und dabei nutzbringend zu verwenden.

Die genannte Aufgabe wird erfindungsgemäß durch die Merkmale der Ansprüche 1 und 7 gelöst. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:

Fig. 1    ein Schema einer Heizungsanlage zur Raumheizung und zur Warmwasserbereitung mit einem diese Anlage führenden Regler und

Fig. 2    ein Diagramm von Temperaturverläufen.

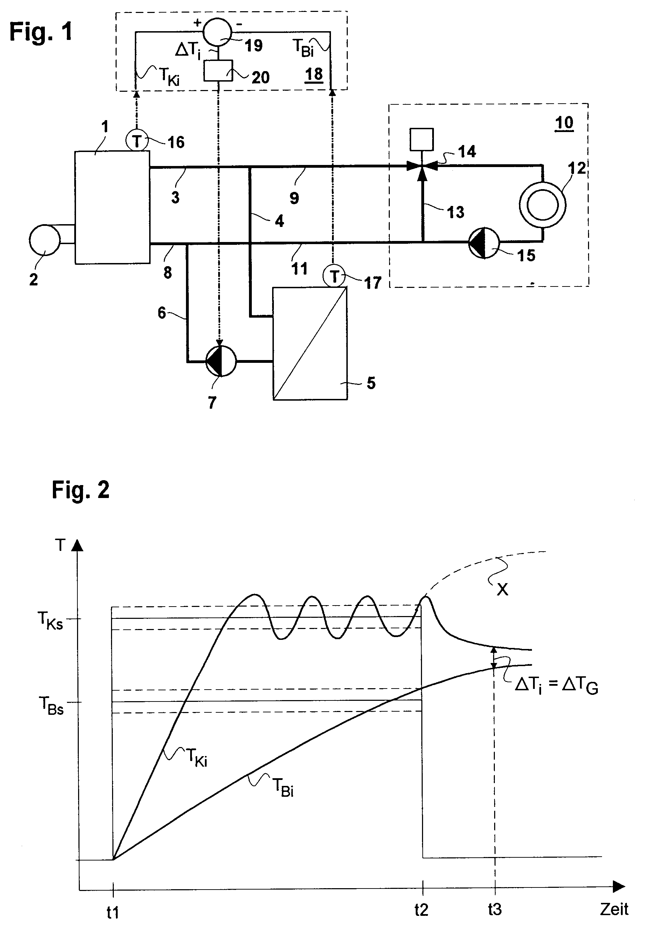

In der Fig. 1 bedeutet 1 einen Heizkessel, der von einem Brenner 2 beheizt wird. An den Heizkessel 1 schließt sich eine Kesselvorlaufleitung 3 an, an den die Wärmeverbraucher anschließbar sind. An das dem Heizkessel 1 abgewandte Ende der Kesselvorlaufleitung 3 schließt sich eine Brauchwasservorlaufleitung 4 an, die in einen Brauchwasserboiler 5 mündet. Der Brauchwasserboiler 5 ist ein Wärmetauscher, dessen sekundärseitige Anschlüsse nicht dargestellt sind. Vom Brauchwasserboiler 5 führt eine Brauchwasserrücklaufleitung 6, in der eine Brauchwasserladepumpe 7 angeordnet ist, zurück zu einer Kesselrücklaufleitung 8, die in den Heizkessel 1 mündet. An das dem Heizkessel 1 abgewandte Ende der Kesselvorlaufleitung 3 schließt sich außerdem eine Heizungsvorlaufleitung 9 an, die zu einem Heizkreis 10 führt. Vom Heizkreis 10 führte eine Heizungsrücklaufleitung 11 zur Kesselrücklaufleitung 8.

Der Heizkreis 10 kann aus verschiedenen Aggregaten bestehen, beispielsweise aus eigentlichen Heizaggregaten 12 wie etwa Radiatoren. Zum Heizkreis 10 kann auch ein eine Bypassleitung 13 steuerndes Mischventil 14 gehören. Der Umwälzung des Wärmeträgermediums dient eine Heizkreispumpe 15, die vorzugsweise in der Heizungsrücklaufleitung 11 angeordnet ist.

Erfindungswesentlich sind ein am Heizkessel angeordneter, regelmäßig aber ohnehin vorhandener Kesseltemperaturfühler 16 und ein am Brauchwasserboiler 5 angeordneter Boilertemperaturfühler 17, der ebenfalls standardmäßig vorhanden ist. Die beiden Fühler 16, 17 sind in üblicher Weise mit einem die gesamte Heizungsanlage führenden Heizungsregler 18 verbunden. Der Begriff "führen" soll aussagen, daß sowohl Steuerungs- als auch Regelungsaufgaben wahrgenommen werden. So werden beispielsweise die Kessel- und die Vorlauftemperatur geregelt, während beispielsweise Pumpen lediglich gesteuert werden. Vom Heizungsregler 18 sind in der Figur nur die erfindungswesentlichen Elemente dargestellt. Dies ist einerseits ein Vergleicher 19, an dessen nicht invertierendem Eingang das Signal des Kesseltemperaturfühlers 16 anliegt, während am invertierenden Eingang das Signal des Boilertemperaturfühlers 17 ansteht. Der Vergleicher 19 bildet somit die Differenz zwischen einem Kesseltemperatur-Istwert $T_{Ki}$ und einem Boilertemperatur-Istwert $T_{Bi}$. Diese Differenz ist mit dem Symbol $\Delta T_i$ bezeichnet. Diese Differenz $\Delta T_i$ gelangt auf einen Eingang einer Schaltstufe 20, die erfindungsgemäß einen Stellbefehl für die Brauchwasserladepumpe 7 generiert.

Das erfindungsgemäße Verfahren besteht darin, daß die Differenz $\Delta T_i$ gebildet und aus dieser Differenz $\Delta T_i$ der Stellbefehl für die Brauchwasserladepumpe 7 gebildet wird. Der Stellbefehl lautet "EIN", solange die Differenz $\Delta T_i$ größer ist als ein vorzugsweise einstellbarer Grenzwert $\Delta T_G$ von beispielsweise 8 Kelvin und er lautet "AUS", sobald die Differenz $\Delta T_i$ diesen Grenzwert $\Delta T_G$ unterschreitet.

Das erfindungsgemäße Schalten der Brauchwasserladepumpe 7 läßt sich anhand der Fig. 2 zeigen. Diese Figur zeigt ein Diagramm, in dem der zeitliche Verlauf des Kesseltemperatur-Istwerts $T_{Ki}$ und des Boilertemperatur-Istwerts $T_{Bi}$ gezeigt ist. Die x-Achse stellt die Zeit dar, die y-Achse die Temperatur. Als dünne waagerechte Linien sind der Kesseltemperatur-Sollwert $T_{Ks}$ und der Boilertemperatur-Sollwert $T_{Bs}$ eingetragen. Zu diesen beiden Linien sind als Parallele die Schaltlinien eingezeichnet, nämlich oberhalb der Sollwert-Linie jeweils die Ausschaltlinie und unterhalb die Einschaltlinie. Der Abstand zwischen zugehöriger Einschalt- und Ausschaltlinie gibt die Schaltdifferenz wieder.

Ein Zyklus einer Brauchwasser-Erwärmung läßt sich nun anhand dieses Diagramms erläutern. Zum Zeitpunkt t1 wird eine Wärmeanforderung für den Brauchwasserkreis ausgelöst, wobei es unwichtig ist, wodurch diese Wärmeanforderung ausgelöst wird. Das kann beispielsweise das Unterschreiten eines Minimalwertes der Boilertemperatur sein. Die Darstellung im Diagramm entspricht etwa dem allmorgendlichen Einschaltbefehl durch einen Sollwertsprung. Um den Benutzern der Einrichtung am frühen Morgen warmes Wasser bereitzustellen, erfolgt prinzipiell eine Aufheizung des Boilers am Ende der Nachtabsenkperiode.

Zum Zeitpunkt t1 wird somit der Kesseltemperatur-Sollwert $T_{Ks}$ auf beispielsweise 75 Grad Celsius angehoben und der Boilertemperatur-Sollwert $T_{Bs}$ auf beispielsweise 60 Grad Celsius. Es ist üblich, daß die Differenz zwischen diesen beiden Sollwerten ca. 10 bis 20 Kelvin beträgt, je nach Bauart von Heizkessel 1 und Brauchwasserboiler 5.

Dadurch, daß zum Zeitpunkt t1 der Kesseltemperatur-Istwert $T_{Ki}$ und der Boilertemperatur-Istwert $T_{Bi}$ unter den jeweiligen Einschaltlinien liegen, wird in bekannter Weise der Brenner 2 eingeschaltet und die Wärmeproduktion beginnt. Gleichzeitig wird in bekannter Weise auch die Brauchwasserladepumpe 7 eingeschaltet. Dadurch beginnen der Kesseltemperatur-Istwert $T_{Ki}$ und der Boilertemperatur-Istwert $T_{Bi}$ zu steigen, wobei der Anstieg des Boilertemperatur-Istwerts $T_{Bi}$ natürlich langsamer erfolgt. Einige Zeit nach dem Beginn des Aufheizens erreicht der Heizkessel 1 seine Solltemperatur, so daß er in bekannter Weise in den EIN-AUS-Taktbetrieb übergeht. Dabei kommt es zu einem gewissen Überschwingen des Kesseltemperatur-Istwertes $T_{Ki}$ gegenüber der Ausschalt- und der Einschaltlinie, wie das aus dem Diagramm zu erkennen ist.

Zum Zeitpunkt t2 erreicht der Boilertemperatur-Istwert $T_{Bi}$ die zum aktuellen Boilertemperatur-Sollwert $T_{Bs}$ gehörende Ausschaltlinie. Dadurch wird in bekannter Weise der Brenner 2 abgeschaltet. Würde nun in diesem Moment auch die Brauchwasserladepumpe 7 abgeschaltet, so erfolgte wegen der im Feuerraum des Heizkessels 1 noch vorhandenen Überschußwärme ein weiterer Anstieg des Kesseltemperatur-Istwertes $T_{Ki}$, nämlich etwa gemäß der gestrichelt eingezeichneten Linie X.

Beim eingangs erwähnten Stand der Technik gemäß DE-A1-35 29 814 wird dieser Anstieg dadurch vermieden, daß die Brauchwasserladepumpe 7 nach dem Ausschalten des Brenners 2 zunächst weiterläuft und außerdem zusätzlich die Heizkreispumpe 15 eingeschaltet wird. Die damit verbundene Abgabe von Wärme in den Heizkreis 10 soll nun aber außerhalb der Heizperiode gemäß der Aufgabe der vorliegenden Erfindung vermieden werden. Unter Heizperiode wird dabei jener Zeitraum verstanden, in dem Wärmebedarf für die Raumheizung besteht. Oft wird die Heizperiode mit "Winterbetrieb" bezeichnet, während jene Zeitspanne, in der kein Wärmebedarf für die Raumheizung besteht, als "Sommerbetrieb" bezeichnet wird. Dabei ist aber zu beachten, daß dies mit dem kalendarischen Sommer und Winter nichts zu tun hat.

In an sich bekannter Weise läuft nun die Brauchwasserladepumpe 7 weiter. Erfindungsgemäß läuft sie aber allein weiter, d. h. die Heizkreispumpe 15 ist nicht in Betrieb. Erfindungsgemäß bleibt die Brauchwasserladepumpe 7 so lange in Betrieb, bis sie durch das nachfolgend genannte Ausschaltkriterium abgeschaltet wird. Dieses Ausschaltkriterium wird erfindungsgemäß durch die Beziehung

$$(T_{Ki} - T_{Bi}) = \Delta T_G$$

gebildet. Die Differenz von Kesseltemperatur-Istwert $T_{Ki}$ und Boilertemperatur-Istwert $T_{Bi}$, die zuvor auch als Differenz $\Delta T_i$ bezeichnet wurde, wird in Beziehung gesetzt zu einem vorzugsweise einstellbaren Grenzwert $\Delta T_G$, der beispielsweise einen Wert von 8 Kelvin aufweist. Sobald also die Differenz von Kesseltemperatur-Istwert $T_{Ki}$ und Boilertemperatur-Istwert $T_{Bi}$ gleich dem Grenzwert $\Delta T_G$ ist, wird die Brauchwasserladepumpe 7 wieder ausgeschaltet.

Nach der Erfindung wird also die im Moment des Ausschaltens des Brenners 2 im Brennraum des Heizkessels 1 vorhandene Überschußwärme im Sommerbetrieb nicht etwa in unökonomischer Weise in den Heizkreis 10 abgeführt, sondern zusätzlich noch in den Brauchwasserboiler 5 transportiert. Dabei wird eine Überschreitung des Boilertemperatur-Sollwertes $T_{Bs}$ bewußt in Kaufgenommen, denn allein dadurch kann die überschüssige Wärme ökonomisch genutzt werden.

Die Nachlaufzeit der Pumpe ergibt sich dabei nicht wie beim Stand der Technik aus Daten, die mit dem Heizkreis 10 zusammenhängen, sondern erfindungsgemäß allein aus der Differenz von Kesseltemperatur-Istwert $T_{Ki}$ und Boilertemperatur-Istwert $T_{Bi}$ und dem Grenzwert $\Delta T_G$. Der Grenzwert $\Delta T_G$ wird vorteilhaft so gewählt, daß tatsächlich noch ein Wärmeübergang vom Wärmeträgermedium des Kesselkreises auf das Brauchwasser möglich ist. Der Grenzwert $\Delta T_G$ richtet sich in erster Linie nach der Bauart des Brauchwasserboilers 5 und beträgt vorzugsweise 8 Kelvin.

Der Grenzwert $\Delta T_G$ hängt also in erster Linie von der Bauart des Brauchwasserboilers 5 ab. Das thermische Verhalten einer bestimmten Bauform eines Brauchwasserboilers 5 ist bekannt. Im Betrieb kann sich das thermische Verhalten eines Brauchwasserboilers, beispielsweise durch Kalkablagerungen auf der Brauchwasserseite, aber durchaus deutlich verschlechtern. Dann dauert es erheblich länger, bis der Grenzwert $\Delta T_G$ erreicht ist. Es ist vorteilhaft, die Dauer der Nachlaufzeit der Brauchwasserladepumpe 7 auf einen Maximalwert zu begrenzen, um die Brauchwasserladepumpe 7 nicht unnötigerweise laufen zu lassen, wenn der Wärmeübergang gestört ist. Die Einführung eines solchen zusätzlichen Zeitkriteriums kann außerdem zusätzlich genützt werden. Wird die Dauer dieser Zeitspanne genügend groß gewählt, so kann das Erreichen dieses Zeitkriteriums als Indiz für einen schlechten Zustand des Brauchwasserboilers 5 gewertet werden. Erfolgt also das Abschalten der Brauchwasserladepumpe 7 nicht durch das Temperaturkriterium, sondern durch das Zeitkriterium, so wird dies als Fehlermeldung "Boiler verkalkt" vom Regler 18 signalisiert. Diese Möglichkeit ist besonders vorteilhaft, weil es ansonsten nicht möglich ist, ohne aufwendige Untersuchungen eine Aussage über den inneren Zustand eines Wärmetauschers zu erhalten. Das Zeitkriterium ist so zu bemessen, daß die Meldung "Boiler verkalt" nur dann erfolgt, wenn eine solche Verkalkung wirklich schon fortgeschritten ist. Bei der Festlegung der Zeitspanne ist zu berücksichtigen, daß auch bei fabrikneuem Brauchwasserboiler 5 die normale Zeit bis zum Erreichen des Grenzwertes $\Delta T_G$ nicht konstant ist. Das kommt schon daher, daß der Kesseltemperatur-Istwert $T_{Ki}$ im Moment des Abschaltens des Brenners 2 unterschiedliche Werte aufweisen kann. Er kann, wie aus der Figur 2 erkennbar, knapp oberhalb der Ausschaltlinie liegen, kann aber andererseits auch, da das Ausschaltkriterium für den Brenner 2 nicht der Kesseltemperatur-Istwert $T_{Ki}$, sondern der Boilertemperatur-Istwert $T_{Bi}$ ist, auch knapp unterhalb der Einschaltlinie liegen. Von daher ergeben sich durchaus deutlich unterschiedliche Laufzeiten für die Brauchwasserladepumpe 7 bis zum Erreichen des Grenzwertes $\Delta T_G$. Wird aber das Zeitkriterium deutlich größer gewählt als die im Normalfall zu beobachtende Laufzeit der Brauchwasserladepumpe 7 bis zum Erreichen des Grenzwertes $\Delta T_G$, so ist die Aussagekraft über den Zustand des Brauchwasserboilers 5 sicher genug. Da die Verkalkung eines Brauchwasserboilers 5 ein langsam vor sich gehender Vorgang ist, spielt es für die Praxis keine Rolle, daß eine Aussage über den Zustand des Boilers nur im Sommerbetrieb erfolgen kann. Daß der Regler eine Meldung "Boiler verkalkt" nur im Sommerbetrieb machen kann, hat sogar den Vorteil, daß der Benutzer eine Entkalkung alsbald in Auftrag geben kann und daß die Arbeit dann noch im Sommer ausgeführt werden kann, zu einem Zeitpunkt also, da das Stillsetzen der Heizungsanlage wegen des fehlenden Raumheizungsbedürfnisses keinen gravierenden nachteiligen Einfluß hinsichtlich des Kornfortbedürfnisses des Benutzers hat.

Die apparative Verwirklichung der mit einem Zeitkriterium verbundenen Optionen ist problemlos möglich, da Regler 18 ohnehin über Zeitmeßglieder und eine Schaltuhr verfügen. Bei mit einem Mikroprozessor arbeitenden Reglern 18 ist die Verwirklichung der erfindungsgemäßen Verfahrensweise ohnehin problemlos möglich.

**Patentansprüche**

1. Verfahren zum Aufheizen von Brauchwasser in einer von einem Regler (18) gesteuerten bzw. geregelten Heizungsanlage mit einem von einem Brenner (2) beheizten Heizkessel (1), durch den ein eine Heizkreispumpe (15) aufweisender Heizkreis (10) und ein Brauchwasserboiler (5) mit Wärmeenergie versorgt werden, wobei durch eine vom Brauchwasserboiler (5) ausgehende Wärmeanforderung der Brenner (2) und eine Brauchwasserladepumpe (7) eingeschaltet werden und beim Erreichen der gewünschten Temperatur im Brauchwasserboiler (5) der Brenner (2) ausgeschaltet wird, während die Brauchwasserladepumpe (7) weiterläuft, dadurch gekennzeichnet, daß im Sommerbetrieb beim Erreichen der gewünschten Temperatur im Brauchwasserboiler (5) die Heizkreispumpe (15) ausgeschaltet bleibt und daß die Brauchwasserladepumpe (7) durch ein aus Kesseltemperatur-Istwert $T_{Ki}$ und Boilertemperatur-Istwert $T_{Bi}$ gebildetes Abschaltkriterium abgeschaltet wird.

2. Verfahren nach Anspruch 1, dadurch gekennzeichnet, daß das Abschaltkriterium gegeben ist durch eine Beziehung

$$T_{Ki} - T_{Bi} = \Delta T_G,$$

wobei $\Delta T_G$ ein vorzugsweise einstellbarer Grenzwert ist.

3. Verfahren nach Anspruch 2, dadurch gekennzeichnet, daß der Grenzwert $\Delta T_G$ eine von der Bauart des Brauchwasserboilers (5) abhängige Größe ist.

4. Verfahren nach Anspruch 3 dadurch gekennzeichnet, daß der Grenzwert $\Delta T_G$ einen Wert von annähernd 8 Kelvin aufweist.

5. Verfahren nach einem der vorhergehenden Ansprüche, daß die Brauchwasserladepumpe (7) abgeschaltet wird, wenn eine bestimmte maximale Nachlaufzeit überschritten ist.

6. Verfahren nach Anspruch 5, dadurch gekennzeichnet, daß eine Fehlermeldung "Boiler verkalkt" generiert wird, wenn die Abschaltung der Brauchwasserladepumpe (7) durch Überschreitung der bestimmten maximalen Nachlaufzeit erfolgt.

7. Vorrichtung zur Durchführung des Verfahrens nach einem der Ansprüche 1 bis 6, dadurch gekennzeichnet, daß der Regler (18) einen Vergleicher (19) aufweist, der eine Differenz $\Delta T_i$ bildet, die der Differenz von Kesseltemperatur-Istwert $T_{Ki}$ und Boilertemperatur-Istwert $T_{Bi}$ entspricht, daß diese Differenz $\Delta T_i$ auf einen Eingang einer Schaltstufe (20) geführt ist, die das Abschaltsignal für die Brauchwasserladepumpe (7) generiert.

**Fig. 1**

**Fig. 2**

EP 0 711 960 A1

| Europäisches Patentamt | EUROPÄISCHER RECHERCHENBERICHT | Nummer der Anmeldung EP 95 11 1803 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-25 09 844 (WIESS HANS) 16.September 1976 <br> * Ansprüche 1,6,8; Abbildungen * <br> ----- | 1 | F24D19/10 |

| | | | RECHERCHIERTE SACHGEBIETE (Int.Cl.6) |
|---|---|---|---|
| | | | F24D |

Der vorliegende Recherchenbericht wurde für alle Patentansprüche erstellt

| Recherchenort | Abschlußdatum der Recherche | Prüfer |
|---|---|---|
| DEN HAAG | 15.Februar 1996 | Van Gestel, H |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................................
& : Mitglied der gleichen Patentfamilie, übereinstimmendes
    Dokument

EPO FORM 1503 03.82 (P04C03)